# EUROPEAN PATENT APPLICATION

(11) **EP 0 601 211 A1**
(43) Date of publication of application: **15.06.1994**
(21) Application number: 93914942.3
(22) Date of filing: 01.07.1993
(51) Int. Cl.: B62L 3/02, B62M 25/04

(54) **BICYCLE BRAKE LEVER ASSEMBLY**

(30) Priority: 02.07.1992 JP 175801/92
(71) Applicant: MORY SUNTOUR INC., Kawachinagano-shi, Osaka-fu (JP)
(72) Inventor: NAKATANI, Akira, Minamikawachi-gun, Osaka-fu 587 (JP)
(74) Representative: Cross, Rupert Edward Blount
(86) International application number: JP9300906
(87) International publication number: WO9401318

(57) **Abstract**

A brake lever device performing not only speed change operation while the steering wheel is stably operated but also quick braking operation. A speed change operation lever (10) provided rearwardly of a brake lever (6) is supported rotatable around an axis intersecting the axis of a steering wheel (2) while being elastically biassed by means of a spring (35) so as to be located at a neutral position serving as a rotation starting point for rotations in a cable taking-up direction and a cable pay-out direction, while a speed change operation mechanism (28) for pulling or feeding a speed change operation cable comprises a cable taking-up body (27) supported rotatable around a shaft body (7), a transmission mechanism (33) for rotating the cable taking-up body integrally with the speed change operation lever when the speed change operation lever is rotated from the neutral position in the cable taking-up direction or in the cable pay-out direction and releasing the interlocking between the speed change operation lever and the cable taking-up body when the speed change operation lever is rotated to be restored to the neutral position, and a locking mechanism (67) for holding the cable taking-up body in a predetermined rotating position.

## Description

### [Field of the Invention]

The present invention relates to a bicycle brake lever assembly provided with a speed change operation mechanism. More specifically, the present invention relates to a bicycle brake lever assembly which allows stable steering control as well as a quick braking operation during a speed change operation.

### [Background Art]

A speed change operation assembly for a sports-type bicycle such as a racing bicycle has been typically mounted on a bicycle frame, for example, on a down tube or on a top tube. In order to perform a speed change operation, therefore, a hand must be removed from a handlebar. During a speed change operation, it is of course impossible to quickly apply brake, and as a matter of fact, the rider must assume a single-hand riding, unavoidably resulting in unstable steering control on the handlebar.

On the other hand, a speed change operation is usually performed when road conditions change, for example, from flat to slope or vice versa. In such a case, the bicycle usually becomes unstable with grater need for a braking operation. Conventionally, the above problem has been relieved by no

means but disposing the speed change operation assembly close to a grip portion of the handlebar or a brake lever so as to decrease the time required to move a hand from the speed change operation assembly to the handlebar or the brake lever, thereby attempting to improve riding safety.

However, even if the speed change operation assembly is disposed close to a grip portion of the handlebar or a brake lever, it is still necessary to remove a hand from the handlebar or a brake lever in order to perform a speed change operation. Thus, the single-hand steering is still unavoidable; handlebar operation becomes unstable and it is still impossible to operate a brake lever quickly.

Furthermore, a bicycle rider tries to assume an optimum riding posture for efficient riding and minimum fatigue. For this reason, the rider grips different places of the handlebar according to different riding conditions such as variation in speeds from low to high, as well as various road conditions such as flat and slope.

For example, when riding on a flat road or downslope at a relatively high speed on a bicycle provided with a handlebar generally known as a drop handlebar, a first riding posture is assumed wherein grip portions at each low end of a generally U-shaped portions are gripped. On the other hand, when climbing on a slope or riding on a flat road at a relatively low speed, a second riding posture is assumed wherein brake brackets are gripped by engaging crotches between thumb and forefinger with respective top faces of the brake brackets. This second riding posture is the most relaxing posture for a rider, and is assumed often for a majority of time during the ride. Therefore, it is necessary to be able to perform brake operation and speed change operation in the first and second riding postures.

In an attempt to solve the above problem, the Japanese Patent Laid-open Hei 2-225191, for example, proposes an arrangement wherein a brake lever is pivotable in directions other than the directions for a brake operation. According to this invention, the brake lever also functions as a speed change lever. Therefore, it is possible for a rider to perform a speed change operation and brake operation at the same time.

However, according to the above brake lever assembly, speed change operation is performed by pivotally moving the brake lever in directions different from the directions for a brake operation. For this reason, a rider may be misled to perform a speed change operation at a time when a brake operation is required or vice versa. In other words the brake operation may be confused with a speed change operation, leading to deteriorated running safety.

Especially, when performing a brake operation or a speed change operation on a rough road, spontaneous vibration of hands and fingers engaged with the brake lever may cause unintended speed change operation or brake operation.

There is another problem: A speed change operation is performed by changing the amount of winding of a speed control cable in correspondence to each speed step. On the other hand in a brake operation, an increase in the amount of force to pull a brake cable results in a greater braking force. Therefore, when a brake operation and a speed change operation is performed by using one operation lever, it is necessary to regulate the force for pivotally moving the lever in order to control braking force while it is also necessary to regulate the amount of pivotal movement of the lever to perform a speed change operation. For this reason, a certain level of mastery is necessary to distinctively control a brake operation and a speed change operation on a single operation lever.

### [Disclosure of the Invention ]

It is therefore an object of the present invention to provide a bicycle brake lever assembly which allows stable steering control as well as a quick braking operation during a speed change operation. Another object of the present invention is to provide a brake lever assembly wherein a speed change operation is not confused with a brake operation.

The present invention provides a bicycle brake lever assembly comprising a brake bracket for attachment to a handlebar and a brake lever pivoted to the brake bracket, wherein
the brake lever assembly includes a speed change lever provided behind the brake lever, and a speed change operation mechanism responsive to the operation of the speed change lever for winding or paying out a control cable extending in the brake bracket,
the speed change lever is supported to pivot about an axis perpendicular to an axis of the handlebar, the speed change lever being elastically urged by a spring to a neutral position which is a commencing point from which the speed change lever pivots in cable winding and paying out directions, whereas
the speed change operation mechanism includes: a cable winding member rotatably supported around a shaft perpendicular to the axis of the handlebar: a transmission mechanism which allows the cable winding member to rotate integrally with the speed change lever when the speed change lever is pivoted from the neutral position in the cable winding or paying out direction while disengaging the speed change lever from the cable winding member when the speed change lever returns to the neutral position: and a retainer mechanism for holding the cable winding member at predetermined rotational positions.

Other objects characteristics and advantages of the present invention will be clearly understood from the later description of a preferred embodiment with reference to the attached figures.

### [Brief Description of the Drawings ]

Fig. 1 is a side view of a brake lever assembly according to the present invention.

Fig. 2 is a front view of the brake lever assembly according to the present invention.

Fig. 3 is a cross-sectional view showing an interior structure of the brake lever assembly according to the present invention.

Fig. 4 is a cross-sectional view taken on the line IV - IV in Fig. 1.

Fig. 5 is a cross-sectional view taken on the line V - V in Fig. 3.

Figs. 6 through 8 are cross-sectional views taken on the line VI - VI in Fig. 3 to show function of the present invention.

Figs. 9 through 11 are cross-sectional views taken on the line IX - IX in Fig. 3 to show function of the present invention.

Figs. 12 through 14 are cross-sectional views taken on the line X II - X II in Fig. 3 to show function of the present invention.

Figs. 15 through 17 are cross-sectional views taken on the line X V - X V in Fig. 3 to show function of the present invention.

Fig. 18 is a plan view of a ratchet regulating disc.

Fig. 19 is a side view of an engaging member.

Fig. 20 is a front view of the engaging member.

### [Best Mode for Carrying Out the Invention]

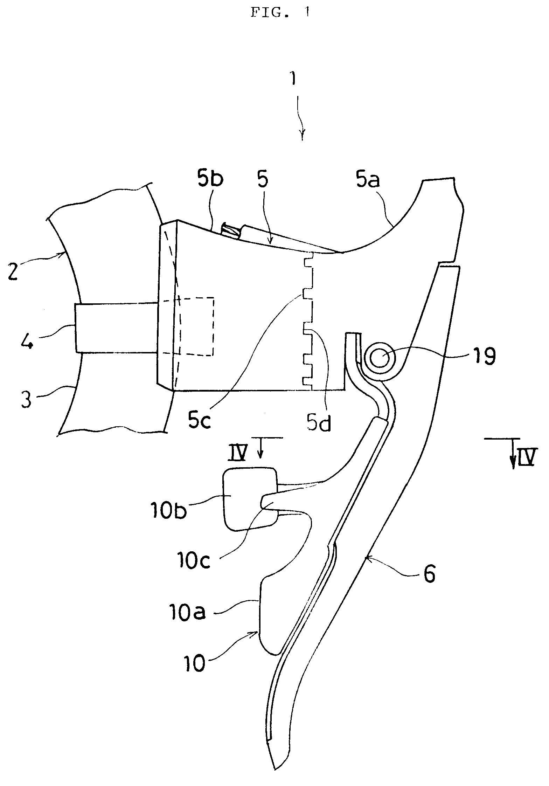

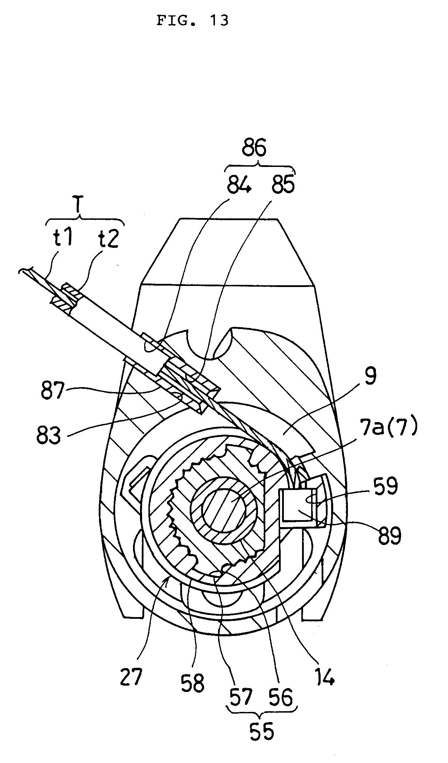

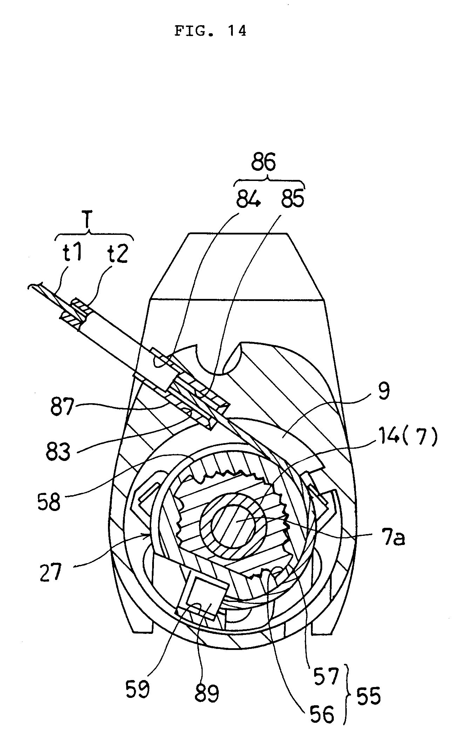

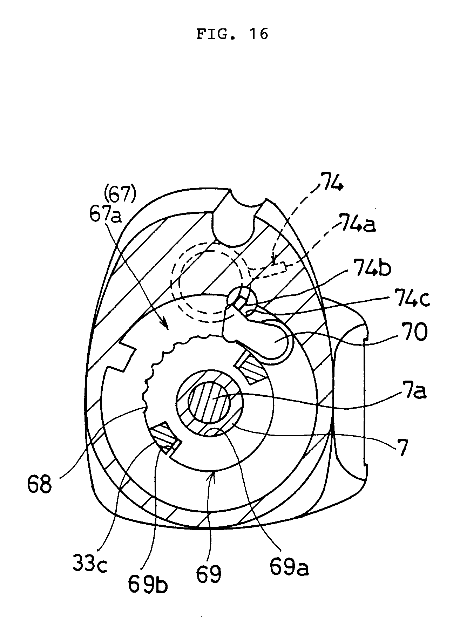

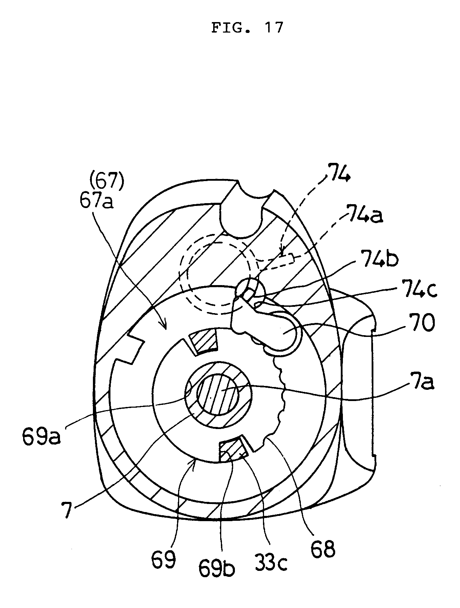

The best mode for carrying out the invention will be described in the following paragraphs with reference to Figs. 1 through 20.

As shown in Fig. 1, a brake lever assembly 1 is disposed at a frond end portion of a generally U-shaped curved portion 3 formed downwardly at each end portion of a drop handlebar 2.

The brake lever assembly 1 generally comprises a fistulous brake bracket 5 projecting forwardly from the curved portion 3, and a brake lever 6 pivotally connected at its base end portion to a front end portion of the brake bracket 5 while extending downwardly of the brake bracket 5.

The brake bracket 5 is provided with a mount 5b for fixation to a front face of the curved portion 3, and a head 5a connected integrally with the mount 5b for pivotally supporting the brake lever 6. The mount 5b houses a speed change operation mechanism 28 within an interior space 9 whereas the head 5a pivotally supports a speed change lever 10 for activating the speed change operating mechanism 28.

As shown in Fig. 1, connecting faces of the head 5a and the mount 5b are respectively provided with engaging projections 5c and engaging recesses 5d for mutual engagement, thereby fixing the head 5a to the mount 5b so as not to relatively rotate to each other.

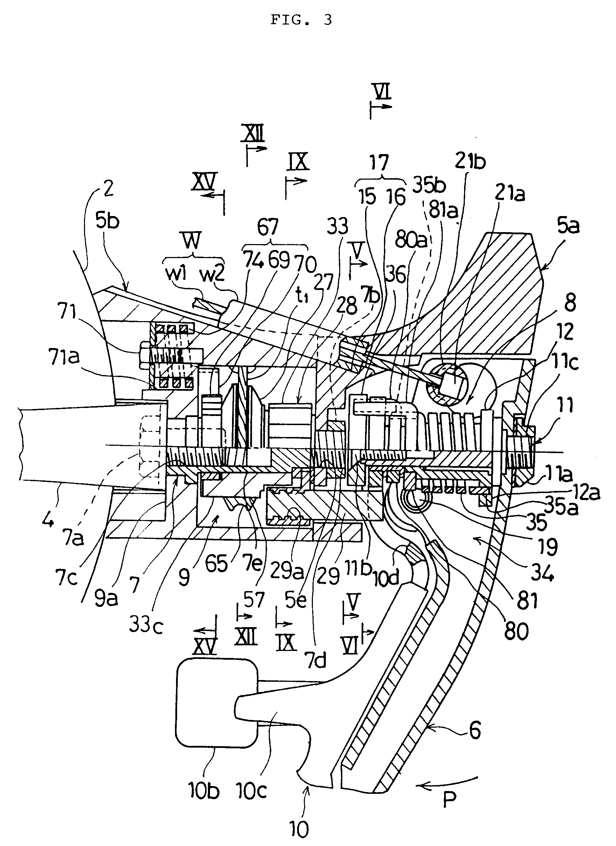

As shown in Fig. 3 the interior space 9 is provided with a partition wall 9a, to which ends of the clamp band 4 wound around the handlebar are fixed. This clamp band 4 fixes the brake lever assembly 1 to the drop handlebar 2, together with a shaft 7 which is perpendicular to an axis of the drop handlebar 2.

The shaft 7 has an internally threaded portion 7c, an intermediate shaft portion 7e, and a threaded end portion 7d. The internally threaded portion 7c receives a fixing bolt 7a inserted through an end portion of the clamp band 4 and the partition wall 9a. The threaded end portion 7d is inserted through a fixing hole 5e provided in the head 5a, and by receiving a nut 7b, fixing the head 5a to the mount 5b. The intermediate shaft portion 7e extends in the interior space 9, supporting the speed change operation mechanism 28.

The head 5a has an interior space 34 capable of housing a base end portion of the brake lever 6. The head 5a supports between its right and left walls a lever shaft 19 which pivotally supports the brake lever 6. The head 5a is provided, at an upper portion closer to its base end, with a support hole 17 comprising a diametrically larger bottomed bore 15 and a diametrically smaller hole 16 perforating the bottom of this diametrically larger bottomed bore 15 to the interior space 34 of the head 5a. A brake cable W comprises an inner wire w1 and an outer sheath w2. An end of the outer sheath w2 is received by and fixed to the diametrically larger bottomed bore 15 while the inner wire w2 is introduced through the diametrically smaller hole 16 into the interior space 34.

The inner wire w1 introduced into the interior space 34 has on its end a nipple 21a which is fixed to a nipple catcher 21b supported by the brake lever 6 so as to pivotally rotate about an axis generally in parallel to the lever shaft 19, thereby fixing the brake cable W to the brake lever assembly 1.

By pivotally moving the brake lever 6 in a direction shown by Arrow P, the inner wire w1 is pulled relative to the outer sheath w2 fixed to the head 5a. This generates a relative axial movement between the inner wire w1 and the other sheath w2, making possible to activate an unillustrated brake assembly for braking on a bicycle wheel.

As shown in Fig. 3, the brake lever 6 is provided at its base end portion with a shaft 11 perpendicular to the axis of the drop handlebar 2. This shaft 11 is connected to the brake lever 6 so as not to rotate relative thereto by having its externally threaded portion 11c at its end portion inserted into a mount hole provided at a base end portion of the brake lever 6, and received by a nut 11a. The shaft 11 rotatably supports the speed change lever 10.

The speed change lever 10 is pivotably supported to the shaft 11 while being elastically urged by a centering mechanism 8 to a neutral position which is a commencing point for pivotal rotation to cable winding and paying out directions.

The centering mechanism 8 has a spring catcher 12, a first urging member 81, a second urging member 80, a coil spring 35, and a stopper 36.

The spring catcher 12, formed into a cylindrical shape, is rotatably inserted around the shaft 11. The first urging member 81 is connected integrally with the spring catcher 12. The second urging member 80 is pivotally supported by the shaft 11 so as to overlap the first urging member 81. The spring 35, inserted around the spring catcher 12, has its one end 35a engaged by a flange 12a of the spring catcher 12 whereas the other end 35b is engaged by the second urging member 80. The stopper 36 is inserted around the shaft 11 so as not to rotate relative thereto, for regulating the pivotal movement of the first and second urging members 81, 80.

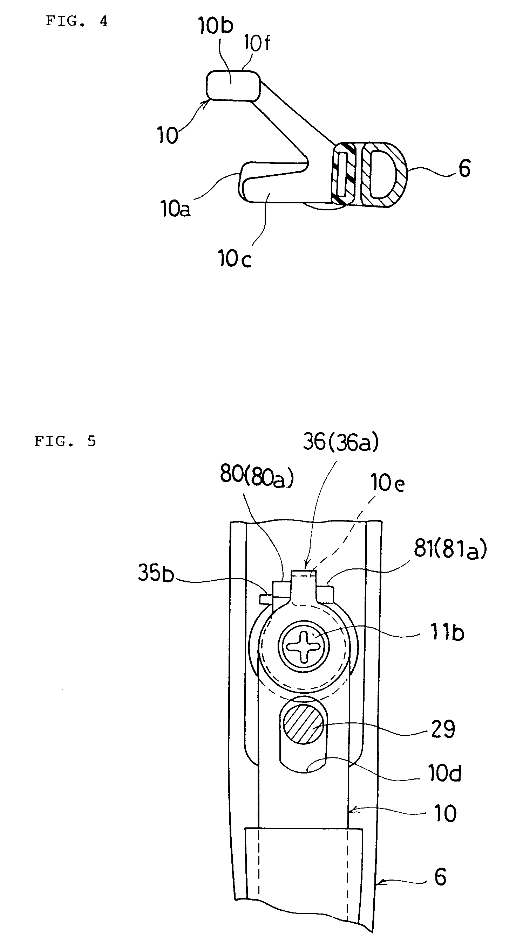

As shown in Figs. 3 and 5, the first and second urging members 81 and 80 are respectively provided on their outer circumferences with catching portions 81a, 80a, each being bent so as to extend in parallel to the axis of the shaft 11. As shown in Fig. 5, these catching portions 81a and 80a flank an engaging tongue 10e formed on a base end circumference of the speed change lever 10 and another engaging tongue 36a formed on an outer circumference of the stopper 36.

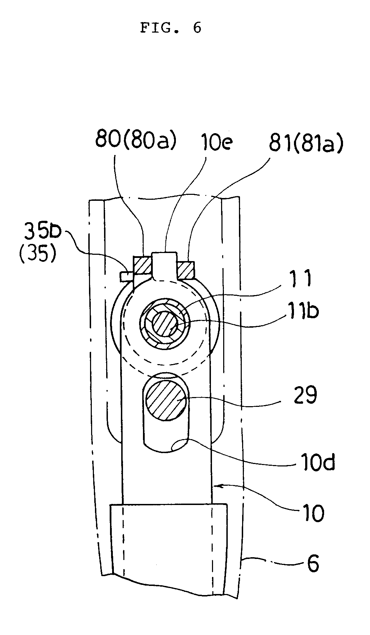

The first urging member 81 is under a counterclockwise elastic urge as viewed in Fig. 5 generated by the spring 35 and transmitted by the spring catcher 12, so that the catching portion 81a elastically urges the engaging tongue 10e of the speed change lever 10 in a counterclockwise direction. On the other hand, as shown in Figs. 5 and 6, the second urging member 80 has the catching portion 80a engaged by the end 35b of the spring 35 so as to urge the engaging tongue 10e in a clockwise direction.

As shown in Fig. 5, the engaging tongues 81a, 80a contact the engaging tongue 36a of the stopper 36 fitted to an end portion of the shaft 11. Thus, the first and second urging members 81, 80 are prevented from rotating toward their respective urging directions.

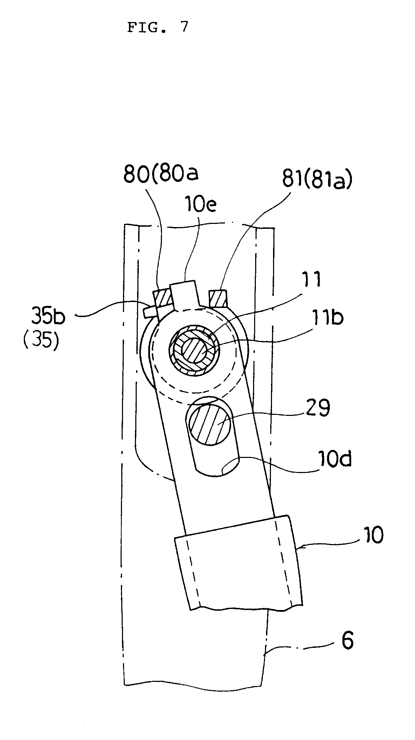

With the above-described arrangement, when the speed change lever 10 is operated from the neutral position to a counterclockwise direction as shown in Fig. 6, the engaging tongue 10e presses the catching portion 80a, as shown in Fig. 7, to cause the second urging member 80 to rotate in a direction to compress the spring 35. When operating force applied to the speed change lever 10 is removed, the speed change lever 10 is automatically returned to the neutral position by the elastically urged catching portion 80a.

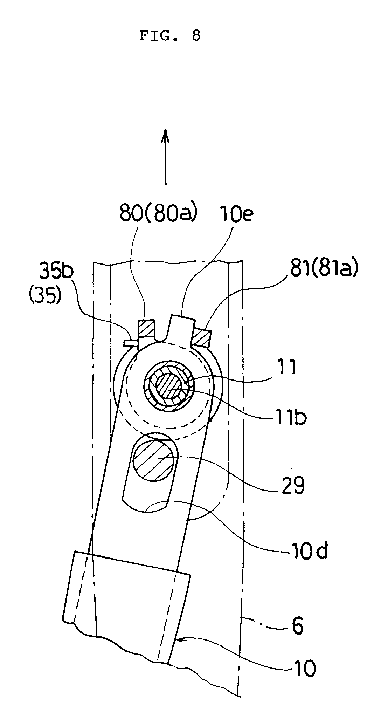

On the other hand, when the speed change lever 10 is operated from a state shown in Fig. 6 in a clockwise direction, the engaging tongue 10e presses the catching portion 81a, causing the first urging member 81 to rotate in a direction to compress the spring 35 as shown in Fig. 8. When operating force applied to the speed change lever 10 is removed, the speed change lever 10 is automatically returned to the neutral position by the elastically urged catching portion 81. In other words, the speed change lever 10 is arranged so that when it is operated to a cable winding or paying out direction and then relieved of the operating force, it is automatically returned to the neutral position.

As shown in Fig. 3, the speed change operation mechanism 28 has a cable winding member 27, a transmission mechanism 33, and a retainer mechanism 67.

The transmission mechanism 33 is arranged so that the cable winding member 27 is allowed to rotate integrally with the speed change lever 10 when the speed change lever 10 is pivoted from the neutral position in the cable winding or paying out direction while disengaging the speed change lever 10 from the cable winding member 27 when the speed change lever returns to the neutral position. The retainer mechanism 67 is arranged so that the cable winding member 27 is retained to a predetermined rotational position.

The transmission mechanism 33 is formed with a drive pin 29 projecting toward the speed change lever 10. The drive pin 29 has an end inserted to a slot 10d formed at a base end portion of the speed change lever 10, and is pivotally rotated by the operation of the speed change lever 10 for driving the speed change operation mechanism 28.

The transmission mechanism 33 will be described more elaborately in the following paragraphs:

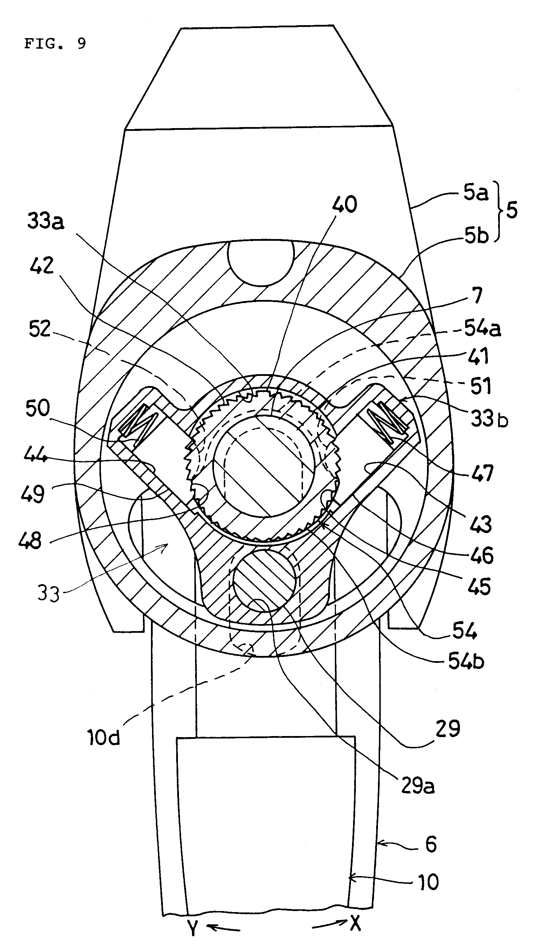

Figs. 9 through 11 show cross-sectional views taken on Line IX - IX in Fig. 3. As shown in Fig. 9, the transmission mechanism 33 includes a roller housing 33b and a ratchet roller 40. The roller housing 33b is rotatably supported around the shaft 7. The ratchet roller 40, mounted around the intermediate shaft portion 7e of the shaft 7 and housed in a bore 33a of the roller housing 33b, is rotated integrally with the cable winding member 27.

As shown in Fig. 9, a symmetrical pair of ratchet teeth rows 41, 42, each extending along an approximately 180-degree span, are provided on an outer circumference of the ratchet roller 40. On this pair of ratchet teeth 41, 42, the teeth orientation of one row is opposite to that of the other row.

The roller housing 33b is provided in its inner wall a pair of cylindrical holding spaces 43, 44 positioned to flank the axis The holding space 43 houses an engaging member 46 which is slidably urged by a spring 47 toward the outer circumference of the ratchet roller 40. The engaging member 46 has a plurality of engaging pawls 45 for engagement with the ratchet teeth row 41 when the speed change lever 10 is rotated in one direction (Arrow X, Fig. 9). Likewise, the other holding space 44 houses an engaging member 49, which is slidably urged by a spring 50 toward the outer circumference of the ratchet roller 40. This engaging member 49 has a plurality of engaging pawls 48 to engage with the ratchet teeth row 42 when the speed change lever 10 is rotated in the other direction (Arrow Y, Fig. 9).

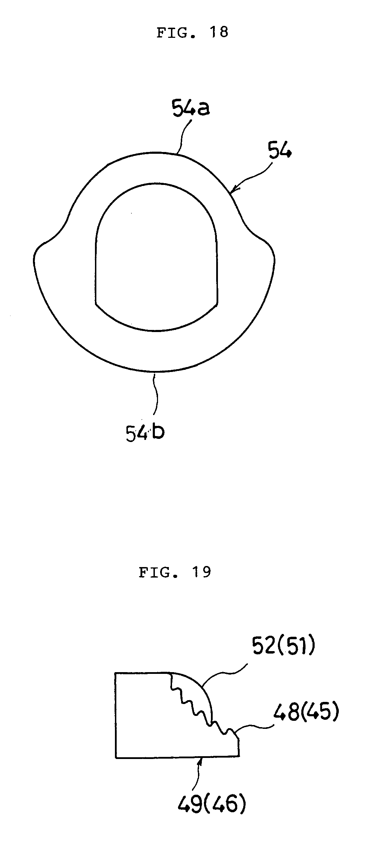

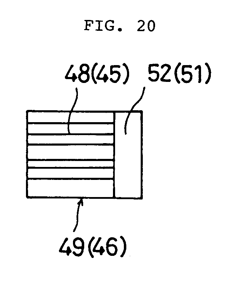

In addition, as illustrated in Figs. 19 and 20, each of the engaging members 46, 49 is formed, on one side of its engaging pawls 45, 48 with a bulge 51 or 52 projecting beyond the engaging pawl.

A generally annular ratchet regulating disc 54 is provided adjacent to the ratchet roller 40. This ratchet regulating disc 54 is fixed around the shaft 7 so as not to rotate relative to the shaft 7. As shown in Fig. 18, the ratchet regulating disc 54 has an non-pressing portion 54a which is a semi-annular portion radially smaller than the ratchet teeth bottom, and a pressing portion 54bwhich is another semi-annular portion radially equal to the top of ratchet teeth. As shown in Fig. 9, the ratchet regulating disc 54 is positioned so that the bulges 51, 52 of the engaging members 46, 49 will train the non-pressing portion 54a when the speed change lever 10 is at the neutral position.

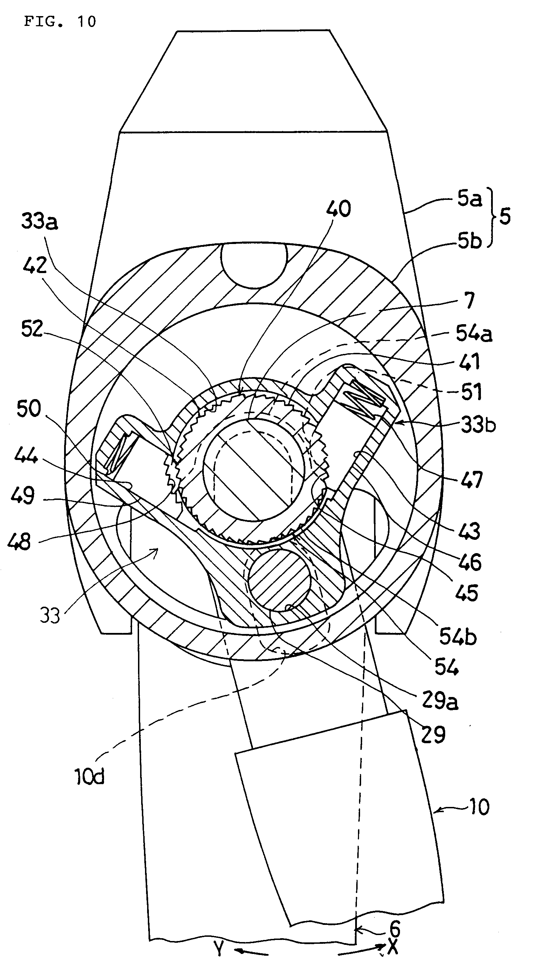

Now, with the above-described state, when the speed change lever 10 is moved in a direction shown by Arrow X as shown in Fig. 10, for example, the bulge 52 of the engaging member 49 (left-side, Fig. 10) rides on the pressing portion 54b, disengaging the left engaging member 49 from the ratchet roller 40. However, the right engaging member 46 still engages with the ratchet roller 40. Since ratchet roller 40 is connected by the connecting means 55 to the cable winding member 27, the engagement of the engaging member 46 with the ratchet roller 40 causes the cable winding member 27 to rotate integrally with the speed change lever 10. When the speed change lever 10 returns to the neutral position, the engaging pawls 45 of the engaging member 46 slip over the ratchet teeth of the ratchet roller 40, and since the left engaging member 49 remains disengaged by its bulge 52 riding on the pressing portion 54b, the cable winding member 27 does not rotate with the speed change lever 10.

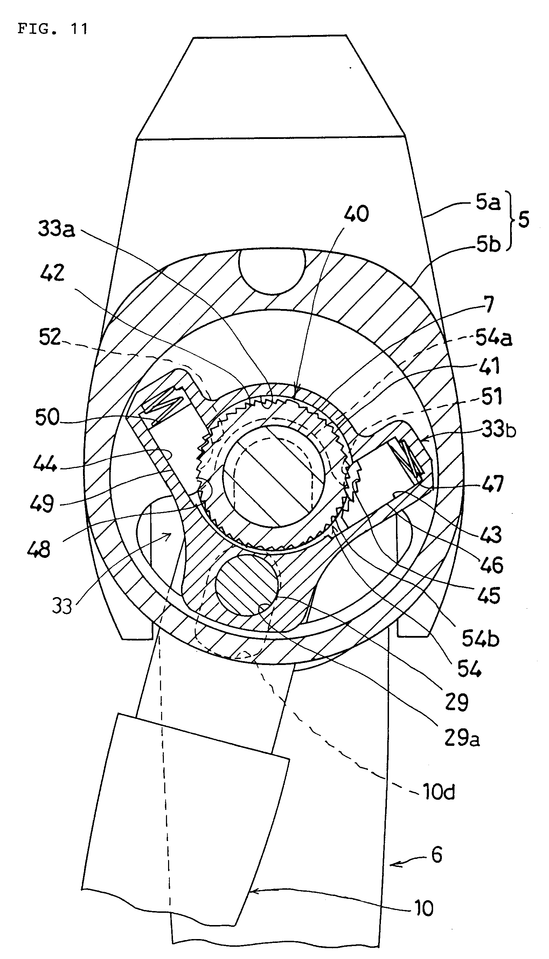

When the speed change lever 10 is moved in the other direction (Arrow Y), the left engaging member 49 engages with the ratchet roller 40, as shown in Fig. 11, causing the cable winding member 27 to rotate integrally with the speed change lever 10. Likewise, when the speed change lever 10 returns to the neutral position, the integral rotation with the speed change lever 10 does not occur.

Thus, the cable winding member 27 rotates with the speed change lever 10 only when the speed change lever 10 is moved from the neutral position in a wire winding direction (Arrow Y) or a wire paying out direction (Arrow X), and does not rotate at all when the speed change lever 10 is returned by the urge of the spring 35 to the neutral position.

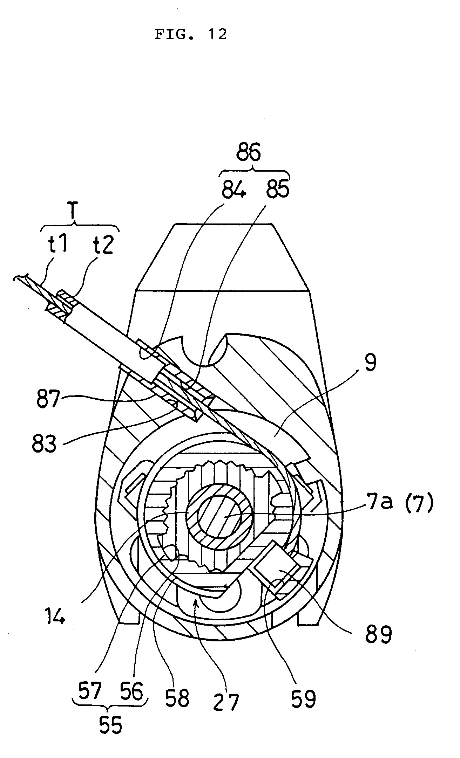

As shown in Fig. 12, the connecting means 55 includes a pair of tongue fitting recesses 56 formed on an inner wall of the cable winding member 27 and a corresponding pair of engaging tongues 57 extending axially from an end of the ratchet roller 40. By fitting the engaging tongues 57 into the tongue fitting recesses 56, the cable winding member 27 is connected to the ratchet roller 40. Hence, when the speed change lever 10 is turned from the neutral position to the wire winding or paying out direction, the ratchet roller 40 and cable winding member 27 rotate integrally with the speed change lever 10.

As shown in Figs. 3 and 12, the cable winding member 27 has a cable winding groove 58 on its outer circumference, and a nipple catcher 59 communicating with the cable winding groove 58, and is rotatably supported around the shaft 7.

A speed control cable T for activating the speed change operation mechanism 28 comprises an inner wire t1 and an outer sheath t2 covering around the inner wire t1. On the other hand, a cable hole 83 is formed for connecting the speed control cable T to the speed change operation mechanism 28, as shown in Fig. 12, on an outer wall of the mount 5b facing the cable winding groove 58.

The cable hole 83 is fitted with a catcher member 87. This catcher member 87 has a supporting hole 86 including a diametrically larger bottomed bore 84 for housing and fixing an end of the outer sheath t2, and a diametrically smaller hole 85 perforating the bottom of the diametrically larger bore 84 toward the cable winding groove 58. An end of the outer sheath t2 of the speed control cable T is inserted into the diametrically larger bottomed bore 84, thereby being fixed to the mount 5b. On the other hand, the inner wire t1 is extended through the diametrically smaller hole 85 into the mount 5b. The inner wire t1 is then wound around the cable winding groove 58, and an end nipple 89 provided at an end of the inner wire is fixed to the nipple catcher 59.

When the speed change lever 10 is pivotally moved, the cable winding member 27 is rotated, and as shown in Figs. 12 through 14, the inner wire t1 fixed to the cable winding member 27 is wound or paid out relative to the outer sheath t2 fixed to the mount 5b. This generates relative axial movement between the inner wire t1 and the outer sheath t2, making possible to activate an unillustrated derailleur for performing a speed change.

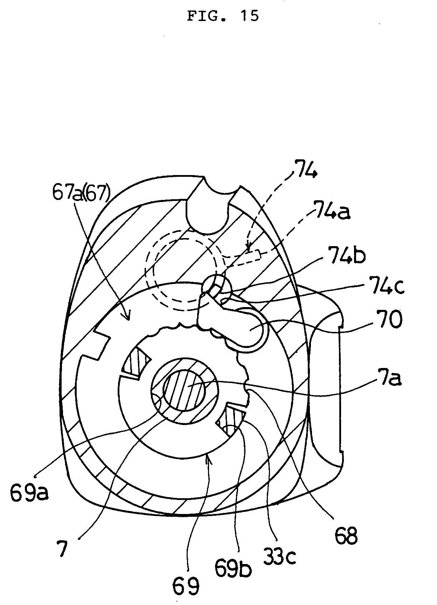

As the retainer mechanism 67 according to the present embodiment, a click mechanism 67a is adopted for holding the cable winding member 27 stepwise. As shown in Fig. 15, this click mechanism 67a comprises a doughnut-shaped click disc 69, an engaging member 70 and a spring 74.

The click disc 69, rotatably fitted around the shaft 7, has on its outer circumference a plurality of engaging recesses 68 and a pair of tongue fitting recesses 69b. The tongue fitting recesses 69b are fitted by a pair of extensions 33c from the engaging tongues 57, thereby causing the click disc 69 to rotate integrally with the cable winding member 27.

The engaging member 70 is pivotally supported to the partition wall 9a and elastically urged by a spring 74 so as to contact the outer circumference of the click disc 69.

As shown in Fig. 3, the spring 74 is inserted into an insertion hole 71a formed at a drop handlebar side of the partition wall 9a. An end 74b of the spring 74 extends through a hole 74c provided on the partition wall 9a to a side where the click disc 69 is provided. The end 74b is contacted to the engaging member 70, elastically pressing the engaging member 70 onto the click disc 69.

Hence, in this click mechanism 67a the engaging member 70 which does not rotate relative to the shaft 27 is elastically contacted to the click disc 69 which rotates integrally with the cable winding member 27. Therefore, when the cable winding member 27 is rotated, the engaging member 70 elastically engages with the engaging recesses 68 successively as shown in Figs. 15 through 17, thereby holding the cable winding member 27 at predetermined rotational positions in a stepwise manner around the shaft 7.

Further, the engaging recesses 68 are formed to correspond to the speed shift steps of a speed shifter. Thus, as shown in Figs. 12 through 14, it is possible to hold the cable winding member 27 at different rotational positions each corresponding to a different speed shift position.

With the above-described speed change operation mechanism 28 according to the present embodiment, the speed change lever 10 is urged by the spring 35 so as to return automatically to the neutral position which is the commencing point from which the speed change lever 10 is pivots in the wire winding or paying out direction. Thus, it is possible to start operating the speed change lever 10 always from the same commencing point.

When the speed change lever 10 returns to the neutral position, ratchet roller 40 and the cable winding member 27 do not integrally rotate with the speed change lever 10. Thus, when the speed change lever 10 returns to the neutral position after being moved to the cable winding or paying out direction, the inner wire t1 is not spontaneously paid out.

Hence, by performing the pivotal operation of the speed change lever 10 a plurality of times, it is possible to rotate the cable winding member 27 intermittently by a desired amount. Furthermore, it is possible to commence the pivotal operation always from the same commencing point. Further, it is possible to wind or pay out the control cable by a desired amount by repeating the pivotal operation of the speed change lever 10 a plurality of times within a certain limited range. Therefore, a rider with small hands and fingers can easily perform speed change operation.

In addition, it is possible to pull the control cable by a desired amount without increasing the amount of pivotal movement of the speed change lever 10 for performing a speed change operation, the speed change operation can be made safely and easily.

Further, according to the present invention, the speed change lever 10 is provided behind the brake lever 6. It is therefore unnecessary to remove a hand from the brake bracket 5 or the grip portion 3 during a speed change operation. Thus, even when a road conditions change abruptly during a speed change operation, it is still possible to perform a brake operation, resulting in remarkably improved safety.

Still further, the speed change operation mechanism 28 has the click mechanism 67a for stepwise retention of the cable winding member 27. Thus, the cable winding member 27 is securely retained at each speed step, resulting in further improved speed changing efficiency.

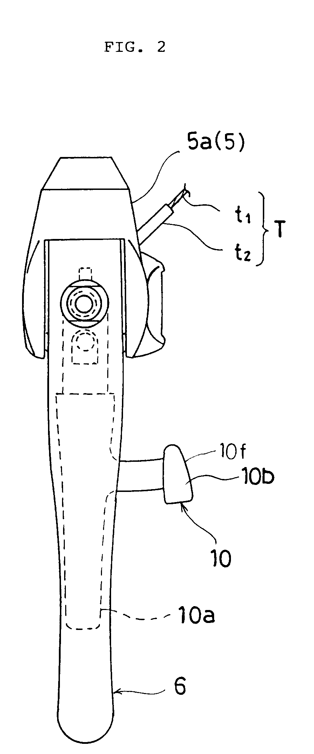

Furthermore, as shown in Figs. 1 and 2, the speed change lever 10 has a first arm portion extending along the brake lever, a second arm portion 10b extending inward laterally-and-backwardly of a bicycle, and a third arm portion 10c extending backwardly of the bicycle. The second and third arm portions 10b, 10c are formed to branch out from an intermediate portion of the first arm portion 10a. The second arm portion 10b is provided with an engaging face 10f for engagement with a thumb.

In the first riding posture wherein the grip portion 3 is gripped, the speed change lever 10 can be easily pressed outward laterally by engaging a thumb with the engaging face 10f since the second arm portion 10b is extended inward laterally-and-backwardly of the bicycle. Therefore, it is possible to sufficiently move the speed change lever 10 outward laterally of the bicycle beyond the neutral position, resulting in remarkably improved speed change operability.

In the second riding posture wherein the hand is placed on a top face of the brake bracket 5, the rider's thumb extends downwardly along an inner face of the brake bracket 5. The third arm portion 10c extends rearwardly from the first arm portion 10a, thus very closely to the thumb tip in the second riding posture. Therefore, an outward lateral pivotal operation can be very easily performed by using the thumb. Also, it is possible to engage a forefinger or a middle finger with the third arm portion 10c for performing the outward lateral pivotal operation. As a result, the speed change operability improves, and in addition, it is possible to deal with an abrupt need for a speed change operation.

Hence, according to the present invention, it is possible to perform a brake operation and a speed change operation without changing the position of a hand and fingers. Further, it is possible to provide a brake lever assembly which allows performing a speed change operation without interfering with the handlebar operation not only in the first riding posture but also in the second riding posture while also allowing a quick braking operation.

According to the present invention, the brake lever 6 and the speed change lever 10 are provided separately, and an arrangement is made wherein the pivoting direction of the brake lever 6 is different from the pivoting direction of the speed change lever 10. Thus, there is no confusion between braking and speed change operations, eliminating possibilities for a brake mis-operation or a speed change mis-operation, resulting in remarkably improved running safety.

The scope of the present invention is not limited to the embodiment described hereinabove.

For example, the speed change operation mechanism, provided with the click mechanism 67a as a retainer mechanism 67, may be provided with another type of retainer mechanism which uses friction for retaining the control cable.

Likewise, the shape of the speed change lever 10 may not be limited to the embodiment; a speed change lever of different shapes may be used.

## Claims

1. A bicycle brake lever assembly comprising a brake bracket for attachment to a handlebar and a brake lever pivoted to the brake bracket, wherein
the brake lever assembly includes a speed change lever provided behind the brake lever, and a speed change operation mechanism responsive to the operation of the speed change lever for winding or paying out a control cable extending in the brake bracket,
the speed change lever is supported to pivot about an axis perpendicular to an axis of the handlebar, the speed change lever being elastically urged by a spring to a neutral position which is a commencing point from which the speed change lever pivots in cable winding and paying out directions, whereas
the speed change operation mechanism includes: a cable winding member rotatably supported around a shaft perpendicular to the axis of the handlebar: a transmission mechanism which allows the cable winding member to rotate integrally with the speed change lever when the speed change lever is pivoted from the neutral position in the cable winding or paying out direction while disengaging the speed change lever from the cable winding member when the speed change lever returns to the neutral position: and a retainer mechanism for holding the cable winding member at predetermined rotational positions.

2. The bicycle brake lever assembly according to Claim 1, wherein the speed change operation lever is pivotably supported around a shaft provided at a base end portion of the brake lever, said shaft being perpendicular to a lever shaft which supports the brake lever.

3. The bicycle brake lever assembly according to Claim 1, wherein a mechanism for pivotally returning the speed change operation lever to the neutral position is provided at a head portion of the brake lever.

4. The bicycle brake lever assembly according to Claim 1, wherein the transmission mechanism includes a drive pin extending toward the speed change lever which is provided with a slot for receiving the drive pin so that the pivotal movement of the speed change operation lever is transmitted through the drive pin to drive the transmission mechanism.

5. The bicycle brake lever assembly according to Claim 1, wherein the retainer mechanism is a click mechanism for holding the wire winding member stepwise.

6. The bicycle brake lever assembly according to Claim 1, wherein the brake bracket includes a mount portion for fixation to the handlebar and a head portion connected to the mount portion, the mount portion encasing the speed change operation mechanism and the retainer mechanism, the head portion pivotally supporting the brake lever and the speed change operation lever.

7. The bicycle brake lever assembly according to Claim 1, wherein the speed change lever includes a first arm portion extending along the brake lever, a second arm portion extending inward laterally of a bicycle, and a third arm portion extending backwardly of the bicycle, the second and third arm portions branching out from an intermediate portion of the first arm portion.

8. The bicycle brake lever assembly according to Claim 7, wherein the third arm portion has an end potion provided with an engaging face for engagement with a rider's thumb.
